# EUROPÄISCHE PATENTSCHRIFT

(11) **EP 2 087 544 B1**
(45) Veröffentlichungstag und Bekanntmachung des Hinweises auf die Patenterteilung: **14.04.2010**
(21) Anmeldenummer: 06806624.0
(22) Anmeldetag: 31.10.2006
(51) Int. Cl.: H01M 8/04

(54) **VERSORGUNGSSYTEM FÜR EINEN BRENNSTOFFZELLENSTAPEL SOWIE VERFAHREN ZUM BETREIBEN DES VERSORGUNGSSYSTEMS**
SUPPLY SYSTEM FOR A FUEL CELL STACK AND METHOD FOR OPERATING THE SUPPLY SYSTEM
SYSTÈME D'ALIMENTATION DE PILE DE CELLULES À COMBUSTIBLE ET PROCÉDÉ D'UTILISATION DU SYSTÈME D'ALIMENTATION

(43) Veröffentlichungstag der Anmeldung: 12.08.2009
(73) Patentinhaber: Daimler AG, 70327 Stuttgart (DE); Ford Global Technologies, LLC, Dearborn, MI 48126 (US)
(72) Erfinder: HORNBURG, Gerald, 73271 Holzmaden (DE); JESSE, Matthias, 73265 Dettingen (DE); MAZZOTTA, Cosimo S., 89073 Ulm (DE)
(74) Vertreter: JENSEN & SON
(86) Internationale Anmeldenummer: PCT/EP2006/010450
(87) Internationale Veröffentlichungsnummer: WO 2008/052577

(56) Entgegenhaltungen:
- EP-A- 1 339 125
- WO-A-2006/045020
- DE-A1-102004 055 158

## Beschreibung

Die Erfindung betrifft eine Versorgungssystem für einen Brennstoffzellenstapel gemäß dem Oberbegriff des Anspruchs 1 sowie ein Verfahren zum Betreiben des Versorgungssystems.

Brennstoffzellenstapel werden bei einer Vielzahl von Anwendungen als zukunftsträchtige Energiequelle angesehen. Insbesondere in der Automobilindustrie wird die Entwicklung der Brennstoffzellenstapel als umweltschonende Energiequelle für Fahrzeuge intensiv vorangetrieben.

Brennstoffzellenstapel umfassen üblicherweise eine Vielzahl von Brennstoffzellen, die über einen elektro-chemischen Prozess elektrische Energie aus einem Brennstoff, oftmals Wasserstoff, und einem Oxidanten, oftmals Umgebungsluft, erzeugen. Hierzu weisen die einzelnen Brennstoffzellen jeweils einen Anoden- und einen Kathodenbereich auf, die durch eine Membran voneinander getrennt sind. Der Anodenbereich wird von dem Brennstoff und der Kathodenbereich von dem Oxidanten durchströmt. Mit Unterstützung von Transportprozesse durch die zwischengeschaltete Membran wird auf katalytischen Wege der elektrische Strom erzeugt.

Obwohl das Grundprinzip der Brennstoffzelle bereits längstens bekannt ist, führen die intensiven Entwicklungen stetig zu neuen Aspekten bei der praktischen Realisierung der Brennstoffzelle.

Die Druckschrift WO 02/23657 A2 fokussiert beispielsweise auf die Erhöhung der Haltbarkeit von Brennstoffzellenanordnungen, die durch den Einsatz eines Schutzgehäuses um die Brennstoffzellen erreicht werden soll. Hierbei soll zur Sicherung von gleichmäßigen Betriebsbedingungen für die Brennstoffzellen der von dem Schutzgehäuse umschlossene Innenraum gasseitig in einen geschlossenen Umwälzkreis geschaltet sein.

Die Druckschrift DE 100 56 536 A1 beschreibt eine Brennstoffzellenanordnung, wobei Anodenrestgase, anstatt rezirkuliert zu werden, ständig in einem den Brennstoffzellenstapel umschließenden Gehäuse mit Zuluft gemischt und danach durch den Kathodenabschnitt des Brennstoffzellenstapels geführt werden.

Die Druckschrift DE 10 2004 055 158 A1, die wohl den nächstkommenden Stand der Technik bildet, behandelt ein Brennstoffzellensystem und ein Verfahren zum Betreiben des Brennstoffzellensystems, wobei eine anodenseitige Abgasleitung eines Brennstoffzellenstapels auf einer Saugseite eines Verdichters in eine Zuführleitung des Oxidanten mündet. Bei einem Purge, also einem kurzzeitigen Reinigungsausstoß der Anodengase, werden die Purgegase mit dem Oxidantenhauptstrom gemischt, mit dem Verdichter komprimiert und dem Kathodeneingang des Brennstoffzellenstapels zugeführt.

Der Erfindung liegt die Aufgabe zugrunde ein Versorgungssystem sowie ein Verfahren zu dessen Betrieb vorzuschlagen, welche zu einem verbesserten Betriebsverhalten eines Brennstoffzellenstapels führen.

Diese Aufgabe wird gelöst durch ein Versorgungssystem mit den Merkmalen des Anspruchs 1 und durch ein Verfahren mit den Merkmalen des Anspruchs 10. Bevorzugte oder vorteilhafte Ausführungsformen der Erfindung ergeben sich aus den abhängigen Ansprüchen, der nachfolgenden Beschreibung bzw. den beigefügten Figuren.

Erfindungsgemäß wird ein Versorgungssystem vorgeschlagen, welches zur Gasversorgung von mindestens einem Brennstoffzellenstapel geeignet und/oder ausgebildet ist. Der Brennstoffzellenstapel weist eine Vielzahl von Brennstoffzellen auf und ist vorzugsweise für den Betrieb in einem Fahrzeug zur Erzeugung der Antriebsenergie für das Fahrzeug ausgebildet. Insbesondere ist der Brennstoffzellenstapel in PEM-Technologie (Proton-Exchange-Membrane) ausgeführt.

Das Versorgungssystem weist eine Kathodengaszuführung auf, welche angeordnet und/oder ausgebildet ist, um einen Oxidanten, insbesondere Umgebungsluft, zu einem Kathodeneingang des Brennstoffzellenstapels zu führen. Eine Anodengaszuführung ist ausgebildet und/oder angeordnet, um Brennstoff, insbesondere Wasserstoffgas, zu einem Anodeneingang des Brennstoffzellenstapels zu führen. Anodeneingang bzw. Kathodeneingang sind mit dem Kathoden- bzw. Anodenabschnitt der Brennstoffzellen des Brennstoffzellenstapels strömungstechnisch verbunden.

Mit einer Anodengasrezirkulation wird das aus einem Anodenausgang austretende, teilverbrauchte Anodengas zu dem Anodeneingang zurückgeführt. Der Einsatz der Anodengasrezirkulation berücksichtigt den Umstand, dass in dem Brennstoffzellenstapel der zugeführte Brennstoff bzw. Wasserstoff nicht vollständig elektrochemisch umgesetzt wird. Der verbleibende Brennstoff bzw. Wasserstoff wird dann mittels der Anodengasrezirkulation zurückgeführt, mit frischem, das heißt unverbrauchtem Brennstoff bzw. Wasserstoff aufgefrischt und über den Anodeneingang dem Brennstoffzellenstapel wieder zugeführt.

Zudem weist das Versorgungssystem eine zuschaltbare Purgeleitung auf, die angeordnet und/oder ausgebildet ist, um ein teilverbrauchtes Anodengas von der Anodengasrezirkulation in die Kathodengaszuführung abzuführen, wobei das abgeführte, teilverbrauchte Anodengas im weiteren als Purgegas bezeichnet wird. Die Abführung des Anodengases als Purgegas wird insbesondere durchgeführt, sobald Verunreinigungen in dem rezirkulierten Anodengas vorbestimmte Grenzwerte überschritten haben und sich nachteilig auf den Betrieb des Brennstoffzellenstapels auswirken.

Erfindungsgemäß umfasst das Versorgungssystem eine Aufbereitungsanordnung, die stromaufwärts vor dem Kathodeneingang angeordnet ist. Die Aufbereitungsanordnung ist ausgebildet, um einen Teilstrom des dem Brennstoffzellenstapel insgesamt zugeführten Oxidanten zu komprimieren bzw. zu verdichten und/oder zu beschleunigen und/oder zu erwärmen und umfasst eine Mischstelle an der der Teilstrom mit dem Purgegas zu einem Mischstrom vereinigt wird. Gegebenenfalls wird der Teilstrom des Oxidanten erst erwärmt, wenn dieser mit dem Purgegas vermischt ist. Die Aufbereitungsanordnung ist zudem ausgebildet, um den Mischstrom in die Kathodengaszuführung zu leiten.

Die Aufbereitungsanordnung setzt somit drei Funktion um, nämlich die Zuführung von Energie in den Teilstrom oder den Mischstrom, die Mischung von Purgegas und Teilstrom und die Einleitung des Mischstroms in die Kathodengaszuführung.

Bei der Erfindung wurde es als vorteilhaft erkannt, dass eine Vorbehandlung des Teilstroms des Oxidanten vor der Mischung mit dem Purgegas und/oder eine Erwärmung des Mischstroms vor Einleitung in die Kathodengaszuführung eine sehr genaue Kontrolle über den Zustand des dem Brennstoffzellenstapel zugeführten Gesamtstromgemisches erlaubt. Aufgrund der verbesserten Zustandskontrolle kann die nachgeschaltete katalytische Umsetzung des in dem Purgegas und somit im Gesamtstromgemisch enthaltenen Restwasserstoffs störungsfrei durchgeführt werden. Insbesondere der Umstand, dass nur ein Teilstrom des Oxidanten gegebenenfalls als Mischstrom, jedoch nicht der gesamte Oxidant vorbehandelt wird, verbessert die Kontrolle über den Zustand des resultierenden Gesamtstromgemisches.

Bei einer bevorzugten Ausführungsform umfasst das Versorgungssystem ein Purgeventil, über das die Purgeleitung zuschaltbar ist. Insbesondere wird das Purgeventil mittels einer Steuervorrichtung angesteuert, die einen Purge beispielsweise in Abhängigkeit der entnommenen Energie aus dem Brennstoffzellenstapel, in Abhängigkeit der Zeit oder in Abhängigkeit von gemessenen Verunreinigungen in dem Anodengas initiiert. Bei dieser Ausführungsform wird nochmals verdeutlicht, dass die Purgeleitung nur zeitweilig, nämlich während eines Purges, durchströmt wird.

Bei einer praktischen Umsetzung des Versorgungssystems umfasst die Kathodengaszuführung eine erste Pumpe, wobei der Ablauf der Aufbereitungsanordnung stromaufwärts vor der ersten Pumpe in der Kathodengaszuführung mündet. Die erste Pumpe dient somit zur Förderung des Mischstroms und des Teils des Oxidantenstroms, welcher nicht durch die Aufbereitungsanordnung geführt wird. Die erste Pumpe kann in beliebiger Bauform ausgebildet sein, insbesondere als Verdrängerpumpe, Strömungsmaschine oder Strömungspumpe.

Bei einer Weiterbildung dieser praktischen Umsetzung zweigt die Zuführung für den Teilstrom des Oxidanten in die Aufbereitungsanordnung vor der ersten Pumpe und/oder vor dem Ablauf der Aufbereitungsanordnung ab. Bei dieser Weiterbildung ist somit nochmals unterstrichen, dass sowohl die Zuführung zu als auch der Ablauf von der Aufbereitungsanordnung stromaufwärts vor der ersten Pumpe in der Kathodengaszuführung münden.

Bei einer bevorzugten Ausführungsform des Versorgungssystems umfasst die Aufbereitungsanordnung eine zweite Pumpe, die zur Beschleunigung und/oder Komprimierung und/oder Verdichtung des insbesondere ungemischten Teilstroms des Oxidanten ausgebildet ist. Diese zweite Pumpe ist insbesondere durch eine Steuervorrichtung steuer- oder regelbar, so dass die dem Teilstrom durch die zweite Pumpe zugeführte Energie einstellbar ist.

Bei einer vorteilhaften Weiterbildung umfasst das Versorgungssystem ein Gehäuse, welches zur insbesondere gasdichten Aufnahme des oder der Brennstoffzellenstapel ausgebildet ist. Das Gehäuse weist Durchströmbereiche auf, welche mit dem oder den Brennstoffzellenstapel(n) thermisch gekoppelt sind. Insbesondere ist die thermische Kopplung als Wärmetauscher ausgebildet, so dass im Betrieb der oder die Brennstoffzellenstapel zur Erwärmung von durch die Durchströmbereiche fließende Gase genutzt werden.

Bevorzugt ist zumindest ein Teil der Durchströmbereiche Bestandteil der Aufbereitungsanordnung bzw. wird dieser zugeordnet, wobei dieser Teil der Durchströmbereiche zur Führung des Mischstroms ausgebildet und/oder angeordnet ist. In dieser Ausgestaltung wird im Betrieb der Mischstrom durch die von den Brennstoffzellen abgegebene thermische Energie erwärmt.

Bei einer anderen Ausführungsalternative sind die Durchströmbereiche oder zumindest ein Teil davon zur Erwärmung des ungemischten Teilstroms ausgebildet. Bei dieser Ausführungsalternative wird somit der Teilstrom verdichtet und erwärmt bevor er an der Mischstelle mit dem Purgegas vermischt wird.

Bei einer dritten möglichen Ausführungsalternative ist die Mischstelle innerhalb des Gehäuses, insbesondere in den Durchströmbereichen angeordnet, so dass sowohl der zugeführte, ungemischte Teilstrom, das zugeführte, ungemischte Purgegas und der abgeführte Mischstrom erwärmt wird.

Alle drei möglichen Alternativen haben den Vorteil, dass auf einer für die Gesamtenergiebilanz sparsamen Weise den Gasen zusätzlich Energie zugeführt werden kann.

Ein weiterer Gegenstand der Erfindung betrifft ein Verfahren zum Betreiben des Versorgungssystems nach einem der vorhergehenden Ansprüche in einem Fahrzeug, wobei ein Anodenpurge durchgeführt wird, indem bei dem Erreichen einer kritischen Verunreinigung des rezirkulierten Anodengases die Purgeleitung zugeschaltet wird, so dass die verunreinigten Anodengase als Purgegase aus der Anodengasrezirkulation in die Aufbereitungsanordnung geleitet werden.

Weitere Merkmale, Vorteile und Wirkungen der Erfindung ergeben sich aus der nachfolgender Beschreibung bevorzugter Ausführungsbeispiele der Erfindung sowie aus den beigefügten Figuren. Dabei zeigen:
- Fig. 1: ein Blockdiagramm eines Brennstoffzellensystems mit einem ersten Ausführungsbeispiel der Erfindung in Form eines Gasversorgungssystems;
- Fig. 2: ein Blockdiagramm einer Abwandlung des Brennstoffzellensystems in Figur 1 als ein zweites Ausführungsbeispiel der Erfindung in Form eines Gasversorgungssystems;
- Fig. 3: ein Blockdiagramm einer weiteren Abwandlung des Brennstoffzellensystems in Figur 1 als ein drittes Ausführungsbeispiel der Erfindung in Form eines Gasversorgungssystems.

Gleiche oder entsprechende Teile sind in den Figuren jeweils mit den gleichen Bezugszeichen versehen.

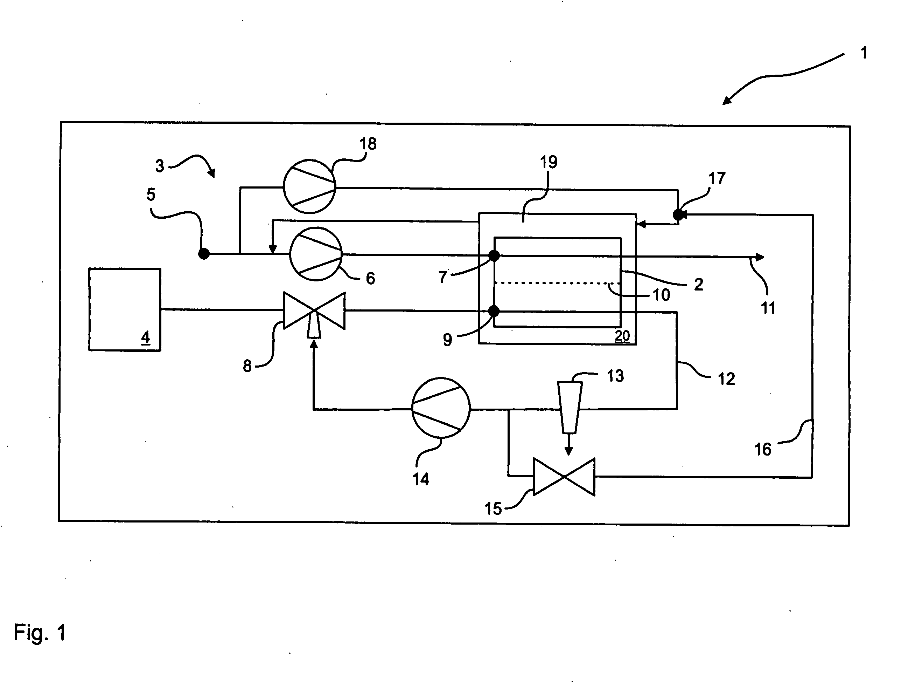

Die Figur 1 zeigt ein Brennstoffzellensystem 1, welches einen Brennstoffzellenstapel 2 umfasst, der mit den für den Betrieb notwendigen Betriebsgasen durch ein Gasversorgungssystem 3 versorgt wird. Das Brennstoffzellensystem 1 wird beispielsweise in einem Fahrzeug (nicht dargestellt) zur Erzeugung der Antriebsenergie für einen Motor eingesetzt. Der Brennstoffzellenstapel 2 weist eine Mehrzahl von Brennstoffzellen auf, die in PEM-Technologie ausgebildet sind.

Zur Versorgung des Brennstoffzellenstapels 2 werden dem Brennstoffzellensystem 1 ein Brennstoff in Form von Wasserstoff aus einem betankbaren Vorratstank 4 und ein Oxidant in Form von Umgebungsluft aus einer Zuführung 5 zugeführt. Die Umgebungsluft wird ausgehend von der Zuführung 5 über eine erste Pumpe 6 verdichtet und dem Brennstoffzellenstapel 2 über einen Kathodeneingang 7 zugeleitet. Der Wasserstoff wird ausgehend von dem Vorratstank 4 über ein Ventil 8 zu einem Anodeneingang 9 in den Brennstoffzellenstapel 2 gebracht. In dem Brennstoffzellenstapel 2 werden Oxidant und Brennstoff elektro-chemisch miteinander umgesetzt, wobei der Oxidant in einem Kathodenbereich und der Brennstoff in einem Anodenbereich geführt werden, die voneinander durch eine PEM-Membran 10 getrennt sind. Die bei der elektro-chemischen Reaktion entstehenden Kathodenrestgase werden über einen Auslass 11 an die Umwelt abgegeben.

Die teilverbrauchten Anodengase werden dagegen über eine Anodengasrezirkulation 12 zu dem Ventil 8 zurückgeführt, mit frischem Wasserstoff aus dem Vorratstank 4 aufgefrischt und wieder dem Anodeneingang 9 zugeleitet. In der Anodengasrezirkulation 12 ist optional ein Wasserabscheider 13 und eine Rezirkulationspumpe 14 zur Verdichtung des rezirkulierten Anodengases vorgesehen.

Bei der Rezirkulation wird das gesamte aus dem Anodenausgang austretende Anodengas zurückgeführt, um den in dem austretenden Anodengas noch vorhandenen Wasserstoff für die elektro-chemische Reaktion des Brennstoffzellenstapels 2 zu nutzen und auf diese Weise die Energiebilanz des Brennstoffzellensystems 1 zu optimieren.

Allerdings akkumulieren sich durch die Rezirkulation Verunreinigungen in dem Anodengas, so dass es in zeitlichen Abständen notwendig ist, das verunreinigte Anodengas oder zumindest Teile davon auszustoßen. Für diesen sogenannten Anodenpurge weist das Gasversorgungssystem 1 eine mittels eines zweiten Ventils 15 zuschaltbare Purgeleitung 16 auf, die an einer beliebigen Stelle, hier zwischen Wasserabscheider 13 und Rezirkulationspumpe 14, von der Anodengasrezirkulation 12 abzweigt.

Die Purgeleitung 16 endet in einer Mischstelle 17, wo dem Purgegas ein Teilstrom des Oxidanten beigemischt wird. Der Oxidantenteilstrom wird ausgehend von der Zuführung 5 über eine zweite Pumpe 18 geführt und mit dieser verdichtet und/oder beschleunigt. Der stromabwärts nach der Mischstelle 17 aus Oxidantenteilstrom und Purgegas bestehende Mischstrom wird nachfolgend in einen Durchströmungsbereich 19 eines den Brennstoffstapel 2 umschließendes Gehäuse 20 geführt. Der Durchströmungsbereich 19 ist mit dem Brennstoffzellenstapels 2 thermisch gekoppelt, so dass der durch den durch Strömungsbereich 19 geführte Mischstrom erwärmt wird. Der Mischstrom tritt im weiteren Verlauf aus dem Durchströmungsbereich 19 und somit aus dem Gehäuse 20 aus und wird stromaufwärts vor der ersten Pumpe 6 dem restlichen Oxidantenstrom wieder zugeführt.

Nach einer Verdichtung durch die Pumpe 6 wird das resultierende Gesamtstromgemisch durch den Kathodenbereich des Brennstoffzellenstapels 2 geführt, wobei der Restwasserstoff katalytisch zu Wasser umgesetzt wird und das Kathodenrestgas schadstofffrei in die Umwelt ausgeblasen wird.

Durch die Teilung des Oxidantenstroms und die mögliche Regelung über die zweite Pumpe 18 kann der Zustand des dem Kathodenbereich des Brennstoffzellenstapels 2 zugeführten Gesamtstromgemisches sehr gut kontrolliert werden, so dass kritische Betriebszustände effektiv vermeidbar sind.

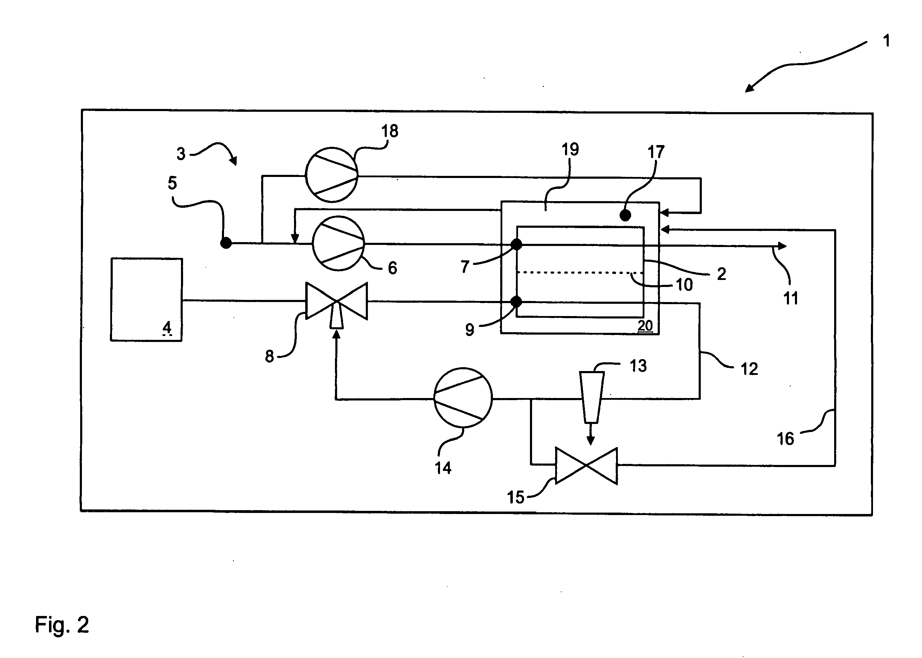

Die Figur 2 zeigt eine Abwandlung des Brennstoffzellensystems 1 in Figur 1, wobei der verdichtete Teilstrom des Oxidanten und das Purgegas getrennt in das Gehäuse 20 geführt werden, so dass die Mischung der Gasströme in dem Durchströmungsbereich 19 innerhalb des Gehäuses 20 erfolgt.

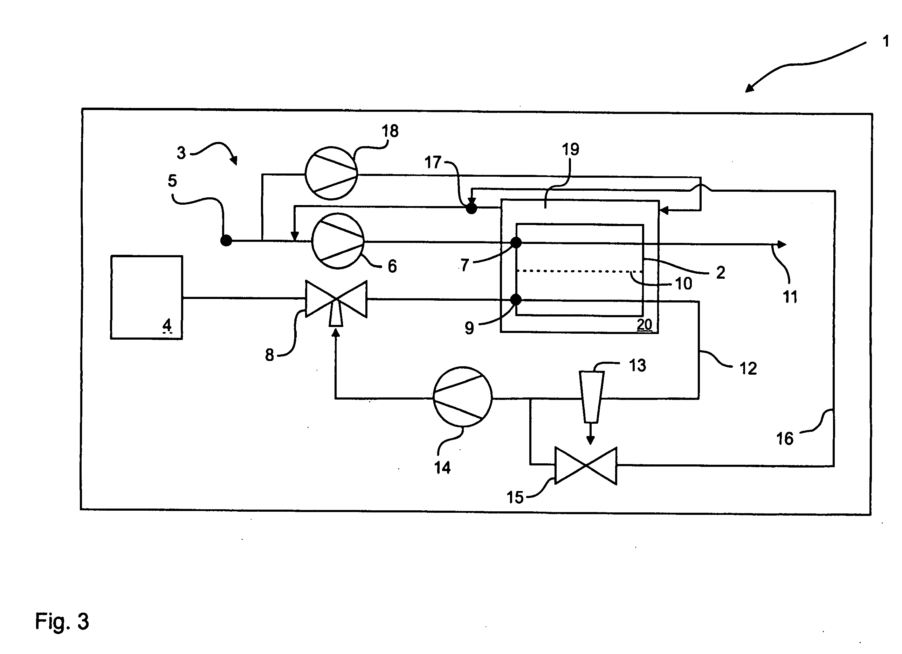

Die Figur 3 zeigt eine zweite Abwandlung des Brennstoffzellensystems 1 in Figur 1 wobei die Mischstelle 17 stromabwärts nach dem Gehäuse 20 angeordnet ist, so dass durch den Durchströmungsbereich 19 nur der verdichtete Teilstrom des Oxidanten, nicht jedoch das Purgegas geführt ist.

## Patentansprüche

1. Versorgungssystem (3) für einen Brennstoffzellenstapel (2)
mit einer Kathodengaszuführung zur Zuführung eines Oxidanten zu einem Kathodeneingang (7) des Brennstoffzellenstapels (2),
mit einer Anodengaszuführung zur Zuführung eines Brennstoffes zu einem Anodeneingang (9) des Brennstoffzellenstapels (2),
mit einer Anodengasrezirkulation (12) zur Zurückführung von teilverbrauchtem Anodengas aus einem Anodenausgang zu dem Anodeneingang (9) und
mit einer zuschaltbaren Purgeleitung (16) zur Abführung des teilverbrauchten Anodengases als Purgegas von der Anodengasrezirkulation (12) in die Kathodengaszuführung,
**gekennzeichnet durch**
eine Aufbereitungsanordnung, die stromaufwärts vor dem Kathodeneingang (7) angeordnet ist und ausgebildet ist,
a) um in einer Mischstelle einen Teilstrom des Oxidanten mit dem Purgegas zu mischen,
b) um den Teilstrom zu komprimieren, zu beschleunigen und/oder den Teilstrom oder den Mischstrom zu erwärmen und
c) um den Mischstrom in die Kathodengaszuführung zu leiten.

2. Versorgungssystem (3) nach Anspruch 1, **dadurch gekennzeichnet, dass** die Purgeleitung (16) mittels eines Purgeventils (15) zuschaltbar ist.

3. Versorgungssystem (3) nach Anspruch 1 oder 2, **dadurch gekennzeichnet, dass** die Kathodengaszuführung eine erste Pumpe (6) aufweist und der Ablauf der Aufbereitungsanordnung stromaufwärts vor der ersten Pumpe (6) in der Kathodengaszuführung mündet.

4. Versorgungssystem (3) nach Anspruch 3, **dadurch gekennzeichnet, dass** die Zuführung für den Teilstrom des Oxidanten stromaufwärts vor der ersten Pumpe (6) und/oder vor dem Ablauf der Aufbereitungsanordnung abzweigt.

5. Versorgungssystem (3) nach einem der vorhergehenden Ansprüche, **dadurch gekennzeichnet, dass** die Aufbereitungsanordnung eine zweite Pumpe (18) umfasst, die zur Beschleunigung und/oder Komprimierung des Teilstroms des Oxidanten ausgebildet ist.

6. Versorgungssystem (3) nach einem der vorhergehenden Ansprüche, **gekennzeichnet durch** ein Gehäuse (20) zur Aufnahme des Brennstoffzellenstapels (2), wobei das Gehäuse (20) Durchströmbereiche (19) umfasst, welche mit dem Brennstoffzellenstapel (2) thermisch gekoppelt sind.

7. Versorgungssystem (3) nach Anspruch 6, **dadurch gekennzeichnet, dass** die Aufbereitungsanordnung die Durchströmbereiche (19) zumindest teilweise umfasst und dass die Durchströmbereiche (19) zur Führung des Mischstroms ausgebildet und/oder angeordnet sind.

8. Versorgungssystem (3) nach Anspruch 6, **dadurch gekennzeichnet, dass** die Aufbereitungsanordnung die Durchströmbereiche (19) zumindest teilweise umfasst und dass die Durchströmbereiche (19) zur Führung des ungemischten Teilstromes ausgebildet und/oder angeordnet sind.

9. Versorgungssystem (3) nach Anspruch 6, **dadurch gekennzeichnet, dass** die Aufbereitungsanordnung die Durchströmbereiche (19) zumindest teilweise umfasst und dass in den Durchströmbereichen (19) die Mischstelle (17) zur Mischung des Teilstroms mit dem Purgegas angeordnet ist.

10. Verfahren zur Durchführung eines Anodenpurges bei dem Versorgungssystem (3) nach einem der vorhergehenden Ansprüche, wobei bei dem Erreichen einer kritischen Verunreinigung des rezirkulierten Anodengases die Purgeleitung (16) zugeschaltet wird, so dass die verunreinigten Anodengase als Purgegase aus der Anodengasrezirkulation (12) in die Aufbereitungsanordnung geleitet werden.

## Claims

1. Supply system (3) for a fuel cell stack (2)
with a cathode gas supply for feeding an oxidant to a cathode inlet (7) of the fuel cell stack (2),
with an anode gas supply for feeding a fuel to an anode inlet (9) of the fuel cell stack (2),
with an anode gas recirculation system (12) for returning partially consumed anode gas from an anode outlet to the anode inlet (9), and
with a connectable purging line (16) for leading away the partially consumed anode gas as a purging gas from the anode gas recirculation system (12) into the cathode gas supply,
**characterised in that**
it comprises a preparation arrangement located and formed upstream from the cathode inlet (7),
a) in order to mix a part-flow of the oxidant with the purging gas at a mixing point,
b) in order to compress and accelerate the said part-flow and/or to heat the part-flow or the mixed flow, and
c) in order to pass the mixed flow into the cathode gas supply.

2. Supply system according to Claim 1, **characterised in that** the purging line (16) can be connected by means of a purging valve (15).

3. Supply system (3) according to Claims 1 or 2, **characterised in that** the cathode gas supply comprises a first pump (6) and the outlet from the preparation arrangement opens into the cathode gas supply upstream from the said first pump (6).

4. Supply system (3) according to Claim 3, **characterised in that** the supply for the part-flow of oxidant branches upstream from the first pump (6) and/or upstream from the outlet from the preparation arrangement.

5. Supply system (3) according to any of the preceding claims, **characterised in that** the preparation arrangement comprises a second pump (18), which is designed to accelerate and/or compress the part-fiow of oxidant.

6. Supply system (3) according to any of the preceding claims, **characterised in that** it comprises a housing (20) for accommodating the fuel cell stack (2), such that the housing (20) has through-flow areas (19) which are thermally coupled with the fuel cell stack (2).

7. Supply system (3) according to Claim 6, **characterised in that** the preparation arrangement contains the through-flow areas (19) at least in part, and the through-flow areas (19) are designed and/or arranged in order to carry the mixed flow.

8. Supply system (3) according to Claim 6, **characterised in that** the preparation arrangement contains the through-flow areas (19) at least in part, and the through-flow areas (19) are designed and/or arranged in order to carry the unmixed part-flow.

9. Supply system (3) according to Claim 6, **characterised in that** the preparation arrangement contains the through-flow areas (19) at least in part, and the mixing point (17) for mixing the part-flow with the purging gas is located in the through-flow areas (19).

10. Method for carrying out an anode purge in the supply system (3) according to any of the preceding claims, such that when a critical contamination level of the recirculated anode gas is reached, the purging line (16) is connected so that the contaminated anode gases are passed as purging gases out of the anode gas recirculation system (12) and into the preparation arrangement.

## Revendications

1. Système d'alimentation (3) pour un empilement (2) de piles à combustible doté d'une amenée de gaz de cathode servant à acheminer un oxydant vers une entrée (7) de cathode de l'empilement (2) de piles à combustible, d'une amenée de gaz d'anode servant à acheminer un combustible vers une entrée (9) d'anode de l'empilement (2) de piles à combustible avec une recirculation (12) de gaz d'anode qui renvoie le gaz d'anode partiellement consommé depuis une sortie d'anode jusque dans l'entrée (9) de gaz d'anode et d'une conduite (16) de purge pouvant être raccordée, destinée à évacuer le gaz d'anode partiellement consommé en tant que gaz de purge depuis la recirculation (12) de gaz d'anode jusque dans l'amenée de gaz de cathode, **caractérisé en ce qu'**un système de préparation est monté en amont de l'entrée (7) de cathode et configuré
a) pour mélanger un écoulement partiel de l'oxydant avec le gaz de purge dans un emplacement de mélange,
b) pour comprimer et accélérer l'écoulement partiel et / ou chauffer l'écoulement partiel ou l'écoulement de mélange et
c) pour amener l'écoulement de mélange dans l'amenée de gaz de cathode.

2. Système d'alimentation (3) selon la revendication 1, **caractérisé en ce que** la conduite (16) de purge peut être raccordée au moyen d'une vanne (15)de purge.

3. Système d'alimentation (3) selon la revendication 1 ou 2, **caractérisé en ce que** l'amenée de gaz de cathode présente une première pompe (6) et la sortie du système de préparation en amont de la première pompe (6) débouche dans l'amenée du gaz de cathode.

4. Système d'alimentation (3) selon la revendication 3, **caractérisé en ce que** l'amenée pour l'écoulement partiel de l'oxydant part en dérivation en amont avant la première pompe (6) et / ou avant la sortie du système de préparation.

5. Système d'alimentation (3) selon l'une quelconque des revendications précédentes, **caractérisé en ce que** le système de préparation comprend une seconde pompe (18) qui est configurée pour permettre l'accélération et / ou la compression de l'écoulement partiel de l'oxydant.

6. Système d'alimentation (3) selon l'une quelconque des revendications précédentes, **caractérisé par** un carter (20) destiné à loger l'empilement (2) de piles à combustible, le carter (20) comprenant des zones (19)d'écoulement, lesquelles sont couplées thermiquement à l'empilement (2) des piles à combustible.

7. Système d'alimentation (3) selon la revendication 6, **caractérisé en ce que** le système de préparation comprend au moins partiellement les zones (19) d'écoulement et **en ce que** les zones (19) d'écoulement sont disposées et / ou configurées pour acheminer l'écoulement de mélange.

8. Système d'alimentation (3) selon la revendication 6, **caractérisé en ce que** le système de préparation comprend au moins partiellement les zones (19) d'écoulement et **en ce que** les zones (19) d'écoulement sont disposées et / ou configurées pour acheminer l'écoulement partiel non mélangé.

9. Système d'alimentation (3) selon la revendication 6, **caractérisé en ce que** le système de préparation comprend au moins partiellement les zones (19) d'écoulement et **en ce que** dans les zones (19) d'écoulement est disposé un emplacement (17) de mélange pour mélanger l'écoulement partiel au gaz de purge.

10. Procédé pour réaliser une purge d'anode dans un système d'alimentation (3) selon l'une quelconque des revendications précédentes, lors de l'atteinte d'une impureté critique du gaz d'anode qui a recirculé, la conduite de purge (16) est raccordée de manière telle que les gaz d'anode pollués comme gaz de purge sont conduits depuis la recirculation (12) de gaz d'anode jusque dans le système de préparation.
